# EUROPEAN PATENT APPLICATION

(11) **EP 3 970 501 A1**
(43) Date of publication of application: **23.03.2022**
(21) Application number: 20306052.0
(22) Date of filing: 18.09.2020
(51) Int. Cl.: A23C 9/13, A23C 9/15, A23C 19/05, C07K 14/47

(54) **METHOD FOR PRODUCING CHEESE SUBSTITUTES**

(71) Applicant: Baio, 75014 Paris (FR)
(72) Inventor: Chayot, Romain, 75014 Paris (FR); Pâques, Frédéric, 63000 Clermont-Ferrand (FR)
(74) Representative: Flesselles, Bruno F.G.

(57) **Abstract**

The invention relates to a method for the production of cheese substitutes comprising mixing a casein composition with other ingredients comprising at least one ingredient among water, calcium, lipids, and carbohydrates, so as to obtain a liquid composition, transforming the liquid composition into a curd by the addition of at least one curdling agent and further processing the curd to obtain a cheese substitute.

## Description

### Field of the invention

The present invention relates to a method for the production of cheese substitutes, based on the mixing of a series of ingredients including ingredients known to be present in milk, and on the transformation of this mixture into a cheese substitute by a series of steps including curdling. This method allows for a better control of the composition of the final products, allowing for the suppression of undesired components, such as lactose and others. When using only ingredients of non-animal origin, this method allows for the making of animal-free cheese substitutes with a precisely determined composition, which can be as close as possible to cheese composition, and can recapitulates the essential features of cheese in terms of texture and taste.

### Background

The domestication of milk producing animals has started thousands of years ago, and has probably initiated in different places on the earth. The use of milk as a protein, sugar and lipid-rich nutrient, has become almost universal in traditional societies. In addition, milk transformation into various derivatives that can be kept for weeks or even months or years, is one of the most ancient examples of human agro-industries. Whereas various theories are still being discussing regarding the origin of cheese production, it is clear that the production of cheese, a nutrient rich in proteins and lipids, still edible after a long time, and easily transported as a solid and concentrated food, was a considerable asset for cattle breeding populations. After several millennium of cheese production, a large diversity of cheese was elaborated all over the planet, becoming in certain countries a cultural benchmark, and being used not only as such, but also as an ingredient in many dishes. Today, the cheese market represents 20 million tons of product per year, for a value of about $140bn.

The raise of the agro-alimentary industry was driven by the demand of a growing, and increasingly urban population. Production had to match a rational demand for a well-balanced diet (animal-derived food is generally a better source of proteins than plant-derived food). However, global demand can also be shaped by other factors. For example, whereas consumers have often tolerated, for economic reasons, a lot of deviation between the industrial products and the original, traditional models, they have also often kept cheese, industrial or not, as a cultural reference, the use of cheese in pizzas, burgers, or as additives for pastas being as many examples of international standards. Thus, cheese is not only a huge market, but a very stable reference in the global food world.

However, dairy products, in general, and cheese in particular, are associated with several issues or concerns, in terms of health, as well as environmental and ethical considerations. These concerns have highlighted the need for dairy product substitutes alleviating these various issues.

Health issues include lactose intolerances, allergies, and others, such as a high content in saturated fatty acids. Lactose intolerance is due to the lack of lactase, the enzyme that degrades lactose in the stomach and small intestine, and result in an accumulation of lactose in the colon, and its digestion by bacteria (Ugidos-Rodriguez et al (2018) Lactose malabsorption and intolerance: a review. Food Funct, Volume 9(8), pages 4056-4068). It is a very common feature in humans, is genetically determined, and results in the need for a dairy-free diet. Whereas this intolerance is very strong with fresh dairy products, and in the first place with milk, it is less pronounced or not observed with dairy products wherein lactose has been largely modified by the fermentation process, such as aged, fermented cheeses. Nevertheless, it remains a real issue with fresh cheeses such as ricotta or cottage cheese, and to a certain point, with many cheese products keeping a high level of lactose.

Milk allergy mostly occurs as an immune reaction against cow's milk proteins, such as alpha-S1-, alpha-S2-, beta-, and kappa-caseins, alpha-lactalbumin and beta-lactoglobulin (Mousan and Kamat (2016) Cow's Milk Protein Allergy. Clin Pediatr (Phila), Volume 55(11) pages 1054-63.; Manuyakorn and Tanpowpong (2018) Cow milk protein allergy and other common food allergies and intolerances. Paediatr Int Child Health, Volume 39(1), pages 32-40). Cow milk protein allergy and other common food allergies and intolerances). It impacts 2 to 3% of infant and young children, resulting notably in the impossibility to replace breastfeeding with feeding cow's milk (the major milk source in human food). However, other dairy products derived from cow also need to be avoided. Cow milk allergy will persist in 0.4% of adults, forbidding in this case the consumption of dairy products from cow's milk, even in small quantities. Indeed, in contrast with lactose intolerance, these allergies can be elicited by very small amounts of the allergenic protein. Therefore, the ability to fully replace the cow's allergenic proteins by non-allergenic homologues or less allergenic homologues from other species (Villa et al (2018) Bovine Milk Allergens: A Comprehensive Review. Comprehensive Reviews in Food Science and Food Safety Volume 17, pages 137-164), or by proteins locally modified to suppress the allergenic epitope could be extremely beneficial, and allow for a broader consumption of dairy products substitutes presenting this modification.

Milk is rich nutrient because it brings not only proteins and carbohydrates, but also lipids, necessary for a balanced diet. However, milk's fat is known to be rich in saturated fatty acids, which can have a potential negative impact on health (Micha and Mozaffarian (2010) Saturated fat and cardiometabolic risk factors, coronary heart disease, stroke, and diabetes: A fresh look at the evidence. Lipids, Volume 45, pages 893-905; Jakobsen et al (2009) Major types of dietary fat and risk of coronary heart disease: A pooled analysis of 11 cohort studies. Am. J. Clin. Nutr; Volume 89, pages 1425-1432; Nettleton et al (2017) Saturated fat consumption and risk of coronary heart disease and ischemic stroke: A science update. Ann Nutr Metab Volume 70, pages 26-33). In a dairy product substitute, this composition could be modulated. In addition, the composition could be reinforced in lipids known to have health benefits, such as omega-3 fatty acids (Shahidi and Ambigaipalan (2018) Omega-3 Polyunsaturated Fatty Acids and Their Health Benefits. Annu Rev Food Sci Technol, Volume 9, pages 345-381), including for example alpha-linolenic acid, eicosapentaenoic acid or docosahexaenoic acid. In cheese, the major part of milk's lipids is kept, but, as in the case of proteins, a large part can be extensively degraded and/or transformed, especially in aged cheese. Nevertheless, cheese is overall considered and perceived as rich in saturated fatty acids (Markey et al (2017) J Dairy Science, Volume 100(10):7953-7966).

In addition, environmental and ethical concerns related to food products of animal origin, including meat, dairy products, and cheese in particular, have become increasingly important over the last decades.

The burden of animal breeding for a 7 billion population (11 billion in 2050) has become increasingly high. In an alimentary chain where the human population wants to consider itself as the last step, each transformation step is inherently bound to considerable losses. The number of animals needed to feed billions of humans, with a diet rich in products of animal origin, is huge, and this animal population needs in turn to be fed with a very performing agriculture. The environmental consequences are severe. They are today mostly considered in terms of anthropogenic greenhouse gas (GHG) emissions, water consumption, pollution by effluents, and land occupation.

Cattle breeding is today considered as one of the first sources GHG emissions, with an estimated 7.1 Gigatonnes of CO2-equivalent per year, representing 14,5% of all anthropogenic greenhouse gas (GHG) emissions the sources and methods (Rotz CA (2017) Modeling greenhouse gas emissions from dairy farms. J Dairy Science, Volume 101, pages 6675-6690), but a study from the UN estimated in 2010 the contribution of the global dairy sector alone to 4% of anthropogenic GGHG emissions (FOOD AND AGRICULTURE ORGANIZATION OF THE UNITED NATIONs, Greenhouse Gas Emissions from the Dairy Sector. A Life Cycle Assessment).

A very strong water consumption is also associated with animal farming breeding of animals (Sultana et al (2014). Comparison of water use in global milk production for different typical farms. Agricultural Systems, Volume 129, pages 9-21). Again, the figures vary a lot depending on the sources. Nevertheless, it is generally admitted that more water is needed to produce one ton of animal protein than one ton of vegetal protein (Ercin and Aldaya (2012) The water footprint of soy milk and soy burger and equivalent animal products. Ecological Indicators, Volume 18, pages 392-402,).

In addition, farming effluents also have a strong environmental impact. Although the impact of crop fertilizers on groundwater should not be neglected, the impact of animal farming effluents is often massive and has proven to be disastrous in many parts of the world (https://www.nrdc.org/issues/livestock-production).

Eventually, livestock takes up nearly 80% of global agricultural land, yet produces less than 20% of the world's supply of calories, showing the very high level of stress brought by animal farming on land resources. Furthermore, addressing land occupation by industrial off soil breeding results in issues of another kind.

Indeed, animal welfare has become an increasingly important concern. Whereas in nature, the size of a predator populations is usually capped by the size of the plant-eating animal population they prey on, humans have rather adapted the populations of farm animals to their needs, whether these needs are essential or not. In most civilizations, animal farming has been mostly driven by yield considerations, and the scale-up of meat and dairy intensive production and processing has turned it into a large scale, intensive industrial process, which is increasingly perceived as ethically not acceptable. Moreover, whereas animal welfare concerns have often focused on meat in the past (in the 70's, people with a vegetarian diet where compensating the loss of animal proteins by the consumption of dairy products), the dairy industry has become increasingly criticized, the first point being that in order to produce milk, cows, ewes, and goats need to have one cub each year.

Therefore, there is a strong need for dairy products substitutes alleviating the issues listed above. Since a large part of milk is transformed into cheese (about 38% in Europe), which remains an international food reference, this need translates for a great part in a need for cheese substitutes.

Plant-based substitutes are a potential alternative to conventional cheese. However, these products, which are often derived from soy, almond, or coconut milk, are often very far from mimicking the taste of dairy products, and whatever the efforts are to get closer to the texture and taste of the original product, are anyway fundamentally different in terms of composition.

Therefore, there is today a need for cheese substitutes
(i) free of undesired compounds
(ii) similar to the original product in aspect, texture and taste
(iii) equivalent or superior to the original products in terms of nutrition

Ideally, in a cheese substitute as defined above, all components or a large part of them would be derived from non-animal sources, lactose and allergenic proteins would be replaced by other molecules, and the composition in saturated/unsaturated fatty acids would be optimized. However, the final product would still have the essential organoleptic and nutritional properties of a cheese.

Basically, cheese is made from milk and salts, with the addition of curdling agents (acids, lactic bacteria, and/or rennet), and the possible addition of various ferments, and other ingredients. Milk, the major and essential cheese component, was evolved by mammals as a unique source of nutrients in a liquid form, easily edible for the sucklings, and capable of supplying them with all the elements required for their rapid growth. It is basically an emulsion of fat globules, in a water phase containing dissolved carbohydrates, proteins and minerals, and other nutrients such as vitamins and others. The four casein molecules (alpha-S1-, alpha-S2-, beta-, or kappa-caseins), representing more than 80% of milk proteins, are organized with calcium phosphate in micelles, roughly spherical particles ranging from 50 to 600 nm in diameter, with an average diameter of around 200 nm (Kruif, Supra-aggregates of casein micelles as a prelude to coagulation (1998) J Dairy Sci, Volume 81 pages 3019-3028; de Kruif et al. Casein micelles and their internal structure (2012) Advances in Colloid and Interface Science, Volume 171-172, pages 36-52). Casein micelles can be reconstituted from recombinant caseins or non-micellar caseins isolated from milk (Haham et al (2012) Stability and bioavailability of vitamin D nanoencapsulated in casein micelles. Food Funct, Volume 3(7), pages 737-44; Bar-Zeev et al (2018) β-Casein micelles for oral delivery of SN-38 and elacridar to overcome BCRP-mediated multidrug resistance in gastric cancer. European Journal of Pharmaceutics and Biopharmaceutics, Volume 133, pages 240-249). Milk composition varies among mammals. Cows' milk typical composition is described in Table 1 and more detailed compositions of cow's and other animals milk, including the listing of the different lipids, proteins, salts, vitamins and other nutrients can be found from a large number of sources (https://en.wikipedia.org/wiki/Milk#Cow's_milk; Haug et al (2007) Bovine milk in human nutrition - a review, Lipids Health Dis.; Volume 6, pages 25; Dominguez-Salasa et al (2019) Contributions of Milk Production to Food and Nutrition Security; Encyclopedia of Food Security and Sustainability, Volume 3, pages 278-291)

**Table 1: Cow's milk composition**

| Type of molecule | mass in 1 liter in grams |
|---|---|
| Water | 902 |
| Lactose | 49 |
| Fat | 39 |
| Caseins | 28 |
| Other proteins | 5 |
| Salts and vitamins | 9 |
| Total | 1032 |

Lipids and carbohydrates (but lactose) can be recovered from plant, calcium from inorganic sources, from animal sources or from plants (such as sea weeds). In the case of proteins, other sources have to be considered, for (i) animal proteins differ in amino-acid content from plant proteins (ii) the micellar structure, a key feature of milk, is specific of caseins, which are not naturally expressed by any plant. However, milk's proteins could also be produced by fermentation, another source of ingredients of a non-animal origin.

Production by fermentation is based on the growth of bacteria or fungi producing a compound of interest in a fermenter, usually followed by the recovery and purification of the compound of interest. Historically, the first example is ethanol, produced by and for humans for thousands of years, in fermented beverages, and partially purified in distilled beverages. Ethanol is today produced by fermentation at a scale sufficient to address not only human direct consumption, but also, as biofuel, a significant part of our energetic needs.

Many other compounds have been produced by thousands of tons in fermenters including lactic acid, amino acids and propanediol. The making of proteins by fermentation is a also a classical process, used in the food industry for decades, with one of the first examples being recombinant chymosin, which was the first artificially produced enzyme to be registered and allowed by the US Food and Drug Administration, and represents today the major share (more 80% in the US today) in the rennet market. (Food Biotechnology in the United States: Science, Regulation, and Issues". U.S. Department of *State.* Retrieved 2006-08-14).

Since then, several studies have described the production of milk's constitutive proteins or homologues by fermentation in various microorganisms (see below) and the assembly of ingredients including fermentation proteins to make milk's substitutes has been described several times (US6270827; US5,942,274;; WO2018039632).

However, in the case of cheese, the making of a substitute having the essential characteristics of the original product in terms of texture, smell, and taste is daunting, given the very complete process of cheese manufacturing.

Cheese results from the transformation of milk by curdling, draining, salting, and many other steps (Gillis JC, Ayerbe A, Le fromage 4eme edition, Lavoisier - Technique Et Documentation 20 avril 2018). Curdling can be achieved by acidification and/or by the use of rennet, both having the property of destabilizing the micellar structure made by caseins and calcium phosphate. Acidification can be obtained by the addition of acid solutions, or, in most cases, by the addition of starter cultures including lactic bacteria, the production of lactic acid resulting in turn in a decrease of pH. Yet, in most cheese varieties, rennet will be added. Rennet is a set of enzymes, including notably chymosin. Whereas rennet has been traditionally obtained from young calves' stomachs, it is frequently replaced today by recombinant chymosin (Emtage et al (1983). Synthesis of calf prochymosin (prorennin) in Escherichia coli. Proc Natl Acad Sci U.S.A., Volume 80 (12), pages 3671-5; Harris et al (1982) Molecular cloning and nucleotide sequence of cDNA coding for calf preprochymosin. Nucleic Acids Res, Volume 10 (7), pages 2177-87).

During curdling, caseins, the major milk proteins coagulate. Upon acidification and/or digestion of k-casein by rennet enzymes, the micellar structure is rapidly destabilized, and caseins form a gel together with lipids, salts, and carbohydrates, while the other proteins are recovered in the whey, together with most of milk's water content. The physical and chemical properties of this gel will be modified upon maturation, and processing will strongly contribute to determine the shape and visual aspect, texture, flavor and taste of the cheese. A large body of data show the sensitivity of the curdling step, and as a consequence, of the texture and taste of the final product, to many factors such as protein or lipid concentration and micelles size, pH, temperature, and many others (Garnot et al (1982) Influence of Protein and Fat Contents of Ultrafiltered Milk on Rheological Properties of Gels Formed by Chymosin. J Dairy Science, Volume 65 (12), pages 2267-2273; Carlson et al (1987) Kinetics of Milk coagulation: the kinetics of Kappa casein hydrolysis in the presence of enzyme deactivation. Biotechnology Bioengineering Volume 29, pages 582-7; Guyomarc'h et al (2003) Role of the soluble and micelle-bound heat-induced protein aggregates on network formation in acid skim milk gels. J Agric Food Chem, Volume 51(26), pages 7743-50; Lee and Lucey (2004) Structure and physical properties of yogourt gels; effect of inoculation rate and incubation temperature. J Dairy Science, Volume.87(10), pages 3153-64; Bittante et al (2012) Genetics and modeling of milk coagulation properties J Dairy Science, Volume 95(12), pages 6843-70; Kethireddipalli and Hill (2015) Rennet Coagulation and Cheesemaking Properties of Thermally Processed Milk: Overview and Recent Developments. J Agric Food Chem, Volume 63(43), pages 9389-403; Brulé and Maubois, Coagulation du lait. In Le fromage Gillis JC, Ayerbe A (2018), Lavoisier ed., Paris).

Thus, whereas, salts, plant-based lipids and carbohydrates can be bought at very reasonable prices, and caseins can be bought or produced simply by fermentation, the outcome of processing a liquid composition resulting from the assembly of these ingredients, concentrated or not (as compared with milk) is impossible to foresee.

Therefore, there is a need for actual methods to transform mixtures of such ingredients into a food product having the essential organoleptic features of a cheese.

### Summary of the invention

The present invention relates to a method for the production of a curd comprising:
- Providing a casein composition
- Mixing said casein composition with at least one other ingredient comprising at least one component selected from the group consisting of water, calcium, lipids, and carbohydrates, so as to obtain a liquid pre-curd composition
- Adding at least one curdling agent to the liquid composition so as to obtain a curd

Said curd can then be further processed, to obtain a cheese substitute.

Such processing of the curd include one or more steps such as
- cutting the curd and heating it
- draining the curd to remove water (this corresponds to the removal of whey in the traditional cheese processing using milk), so as to allow the curd to form a mat
- texture the curd: it may be cut into section, piled, flipped, pressed so as to expel more water in case it is needed or allow fermentation to continue
- dry and/or salt and/or brine to product
- form blocks of cheese substitute.

The substitute can be stored and allowed to age, in particular to allow taste and texture to mature and develop.

This process has the advantage of precisely controlling the composition of the curd. The composition of the various ingredients can be adjusted, in order to closely mimic the composition of cheese in the final product, and its organoleptic properties, while suppressing undesired compounds, or enhancing components with a beneficial impact on health. Notably, it is possible to minimize the components of animal origins, and even to totally suppress them. This process also allows to remove allergenic components, or lactose, which can result in lactose intolerance, and to precisely modulate lipid composition, for example, to enhance the proportion of lipids such as omega-3.

### Definitions

In the context of the present invention, the term "edible composition" means a food product.

In the context of the present invention, the term "cheese substitute" means a food product having the essential features of cheese in terms of nutritional value, aspect, texture and taste.

In the context of the present invention, the term "casein" designates a protein homologous to a natural casein found in a mammalian animal. Such casein can be homologous to alpha-S1-, alpha-S2-, beta-, or kappa-caseins

In milk, caseins are organized in micelles, structures wherein casein are associated with calcium phosphate, with an average diameter of 120 nm to 180 nm. Such micelles can be observed by electronic microscopy, and their size can be evaluated for example by dynamic light scattering (Kruif, Supra-aggregates of casein micelles as a prelude to coagulation (1998) J Dairy Sci, Volume 81 pages 3019-3028; Cohen et al (2017) Re-assembled casein micelles improve in vitro bioavailability of vitamin D in a Caco-2 cell model. Food Funct 8:2133-2141). In the context of the present invention, "Micellar Casein" designates caseins organized in such higher order structures, together with calcium phosphate and possibly other molecules or ions, with a size in the range of 50-600 nm.

In the context of the present invention, the term "casein composition" designates a composition wherein caseins, in contrast to what is seen in milk (in which total proteins in milk represent 3.2% of its composition, 80% of which being caseins), represents the major part of dry weight. Such casein composition can be solid or liquid, and contains at least one casein as defined above. Such casein composition can result from the purification of caseins from milk or from the production of caseins by microbial cultures, or by cultured mammalian cells, and subsequent purification. Such casein composition can comprise other compounds, notably calcium, other proteins, lipids and others. A casein composition produced by a microbial culture is a casein composition of non-animal origin.

In the context of the present invention, the term "liquid pre-curd composition" or "LpCC" designates the composition containing at least a casein and at least one other ingredient comprising at least a component among water, calcium, lipids, an carbohydrate, before the addition of rennet and ferments and curdling (in particular coagulation of casein).

In the context of the present invention, the term "curdling agent" designates a chemical or biochemical composition capable of triggering curdling. Curdling can be achieved by the addition of acid solutions, by the addition of starter cultures (which growth in the presence of carbohydrates triggers a decrease of pH), by heat treatment, by addition of calcium chelating agent, by the addition of natural or recombinant rennet, by the addition of rennet substitutes, such as animal proteases, or vegetal curdling enzymes), or by a combination of these processes. A curdling agent may be any additive, compound, composition or treatment which addition results in curdling, alone or in combination with another or others additives, compounds, compositions or treatments.

In the context of the present invention, the term "ferment" designates a composition containing at least one microbial strain, added during the process of production of the cheese substitute. Lactic ferments are responsible for lactic fermentation, resulting notably in an acidification of the medium. Other ferments are needed in cheese production for the processing of the curd, resulting in modifications of texture, taste, smell, and chemical composition (with notably the cleavage of proteins into smaller peptides).

In the context of the present invention, the term "of non-animal origin" means a compound or composition which has not been directly derived from an animal, produced from animal cells in culture, or isolated from animal products such as milk. Compounds or compositions produced by fermentation of microbes are thus "of non-animal origin" even though some products of animal origin, bacto peptone for example, can be involved during fermentation. Therefore, in the context of the invention, a protein that is naturally produced in animals will be called of non-animal origin when it is produced in microbial (such as bacterial or yeast) cells or in plant cells, even though its sequence or structure may be identical to the sequence or structure of the protein that would be isolated from animal.

In the context of the present invention, the term "animal-free" means a compound or composition which has not been derived from an animal, from animal cells in culture, or from animal products such as milk, and whose production process does not involve any feedstock or additive of animal origin.

In the context of the present invention, the term "fermentation" designates the process used for the production of a compound of interest, comprising the steps of growing a cellular culture producing the compound of interest in a fermenter, and recovering the compound of interest. In the case of microbial fermentation, bacteria or fungi (such as yeasts) are used for production. However, the term fermentation is also used for production processes relying on cultured mammalian cells, such as CHO cells or others. Prokaryotic or eukaryotic cells can be used for the fermentation process.

In the context of the present invention the term "recombinant" means that the organism or microorganism, is genetically modified so as to contain a nucleic acid molecule encoding at least a protein, as compared to a wild-type or non-modified organism or microorganism.

### Detailed description of the invention

The present invention relates to a method for the production of an edible composition (in particular a curd) comprising:
- Providing a casein composition
- Mixing said casein composition with at least one other ingredient comprising at least one component selected from the group consisting of water, calcium, lipids, and carbohydrate, so as to obtain a liquid composition
- Adding at least one curdling agent to the liquid composition so as to obtain a curd

The present invention also relates to a method for the production of an edible composition comprising:
- Providing a casein composition
- Mixing said casein composition with at least one other ingredient comprising at least one component selected from the group consisting of water, calcium, lipids, and carbohydrate, so as to obtain a liquid composition
- Adding at least one curdling agent to the liquid composition so as to obtain a curd
- Further processing the curd to obtain an edible composition.
In the preferred embodiment, the edible composition is a cheese substitute.

### Caseins

In the context of the present invention, a casein composition is used. In a preferred embodiment, the caseins represent more than 50% of the dry weight of said composition. In a preferred embodiment, the caseins represent more than 60% of the dry weight of said composition. In another preferred embodiment, the caseins represent more than 70% of the dry weight of said composition. In another preferred embodiment, the caseins represent more than 80% of the dry weight of said composition. In another preferred embodiment, the caseins represent more than 90% of the dry weight of said composition. In another preferred embodiment, the caseins represent more than 80% of the dry weight of said composition. In another preferred embodiment, the caseins represent more than 95% of the dry weight of said composition. The percentage of casein out of dry weight corresponds to the mass of casein divided by the total dry weight within the composition.

In a preferred embodiment, the casein composition contains at least one casein among alpha-S1-, alpha-S2-, beta-, or kappa-caseins. In a more preferred embodiment, the casein composition contains at least two caseins among alpha-S1-, alpha-S2-, beta-, or kappa-caseins. In a more preferred embodiment, the casein composition contains alpha-S1-, alpha-S2-, beta-, or kappa-caseins.

Caseins are one of the hallmarks of dairy products, both as milk's major proteins, and as a well-balanced source of amino acids, with a high amount of essential amino acids, and branched chain amino-acids (BCAA). During the curdling step, the caseins remain with the solid phase, and in this regard, they are the essential protein components of all cheese and cheese precursors. However, caseins are progressively degraded during cheese processing and aging. Proteases produced by the ferments or contained in the rennet composition progressively cleave them into smaller peptides and even in free amino acids. This proteolysis contributes a lot in the changes of organoleptic properties of the final product. The peptides and free amino acids can have a direct organoleptic role, or an indirect one, when they are in turn transformed into other molecules impacting the organoleptic properties.

In addition to this qualitative evolution, the global protein content (including caseins and derived peptides) vary a lot with draining and aging. It is therefore highly dependent on cheese type and production process. Protein content in the LpCC will highly impact the protein content in the final product, and can be adjusted in order to produce a substitute for a desired type of cheese. Protein content in the LpCC (weight content), corresponds to the mass of protein in the LpCC divided by the total mass of the LpCC.

In a preferred embodiment, protein content in the LpCC is inferior to 12% (weight content). In a more preferred embodiment, it is comprised between 2% and 10% (weight content). In a more preferred embodiment, it is comprised between 5% and 10% (weight content). These amounts are particularly interesting for the production of a substitute for fresh cheese.

In another preferred embodiment, protein content in the LpCC is comprised between 10% and 25% (weight content). In a more preferred embodiment, it is comprised between 10% and 18% (weight content). These amounts are particularly interesting for production of a substitute for a soft or semi-soft cheese.

In another preferred embodiment, protein content in the LpCC is comprised between 25% and 35% (weight content). These amounts are particularly interesting for production of a substitute for a firm or hard cheese.

In another preferred embodiment, protein content in the LpCC is higher than 35% (weight content). These amounts are particularly interesting for the production of a cheese substitute with an enhanced casein composition, as compared with conventional cheeses.

Milk-derived casein is available commercially at relatively low prices today, and is used as a food ingredient, as a food additive for body builder, or as a component for glues, paints, and others. In milk, caseins are organized in micelles, sequestering large amounts of calcium phosphate in a complex organization (see above). Purified casein is commercialized as micellar casein, or as caseinates, isolates without micellar structure. In addition, casein micelles can be reconstituted from recombinant caseins or non-micellar caseins isolated from milk (see above).

In a preferred embodiment, the casein composition comprises micellar casein. In a more preferred embodiment, the casein composition comprises more than 50% of micellar casein. In a more preferred embodiment, the casein composition comprises more than 90% of micellar casein.

Casein of animal origin can be used, together with plant-based lipids, carbohydrates and other ingredients, in order to produce cheese substitutes having for example a lower content in lactose, non-allergenic caseins (from animal other than cows, or non-allergenic variants of cow's casein), and/or higher contents in nutraceuticals such as omega-3 lipids. In another embodiment, such casein of animal origin is generated from animal cells, instead of directly from livestock. Such cells can be recombinant, expressing recombinant caseins.

However, caseins of non-animal origin can also be produced, by fermentation technologies. Several studies have described the production of milk's constitutive proteins or homologues by fermentation in various microorganisms (Goda et al (2000) Recombinant expression analysis of natural and synthetic bovine alpha-casein in Escherichia coli. Appl Microbiol Biotechnol, Volume 54, pages 671-676; Kim et al (1997) High-level expression of bovine beta-lactoglobulin in Pichia pastoris and characterization of its physical properties. Protein Eng, Volume10(11), pages 1339-45; Kim et al (2005) Production of human caseinomacropeptide in recombinant Saccharomyces cerevisiae and Pichia Pastoris; J Ind Microbiol. Biotechnology, Volume 32, pages 402-408; Choi BK and Jimenez-Flores R (2001) Expression ad purification of Glycosylated Bovine b-casein (L70S/P71S) in Pichia Pastoris. J Agric Food Chem, Volume 49, pages 1761-1766; Viaene et al (1991) Efficient expression of bovine alpha-lactalbumin in Saccharomyces cerevisiae. Eur J Biochem, Volume 202(2), pages 471-7; US6,232,094; WO2013/148328; US2010/0223682; US5,942,274; WO2018039632 or plant cells (US20100119691).

In a preferred embodiment, the casein composition comprises casein of non-animal origin. The presence of casein of non-animal origins will decrease the number of animals required for making a same amount of cheese, thereby addressing in part the environmental and ethical concerns described above. In composition comprising casein of animal and non-animal origin, casein of animal origin is blended with casein of non-animal origin. In a more preferred embodiment, the casein composition comprises more than 50% of caseins of non-animal origin. In a more preferred embodiment, the casein composition, comprises only caseins of non-animal origin.

The present invention also relates to a method for the production of an edible composition comprising:
- Providing a casein composition comprising a casein of non-animal origin
- Mixing said casein composition with at least one other ingredient comprising at least one component selected from the group consisting of water, calcium, lipids, and carbohydrate, so as to obtain a liquid composition
- Adding at least one curdling agent to the liquid composition so as to obtain a curd
- Further processing the curd to obtain a cheese substitute

In a preferred embodiment, said casein composition is entirely of non-animal origin. In another preferred embodiment, said casein composition comprises at least 75% of caseins of non-animal origin. In another preferred embodiment, said casein composition comprises at least 50% of caseins of non-animal origin.

In a preferred embodiment, the casein(s) from the casein composition is (are) produced by fermentation of a recombinant microorganism. In a more preferred embodiment, the casein(s) from the casein composition is (are) produced by fermentation of recombinant fungi or bacteria. In a more preferred embodiment, the casein(s) from the casein composition is (are) produced by fermentation of recombinant microorganism chosen among *Escherichia coli, Bacillus subtilis, Salmonella typhimurium, Saccharomyces cerevisiae, Kluyveromyces lactis, Pichia Pastoris,* or *Trichoderma reseei,* or in microorganism chosen in the *Saccharomyces, Kluyveromyces, Pichia, Zygosaccharomyces, Candida,* or *Trichoderma* genus of fungi.

Such recombinant microorganism can be obtained by the introduction of a nucleic acid molecule encoding one or several caseins, alone or as part of a vector. The nucleic acid molecules can further comprise expression control sequences operably linked to the polynucleotide comprised in the nucleic acid molecule. The term "operatively linked" or "operably linked", as used throughout the present description, refers to a linkage between one or more expression control sequences and the coding region in the polynucleotide to be expressed in such a way that expression is achieved under conditions compatible with the expression control sequence. Regulatory elements ensuring expression in fungi as well as in bacteria, are well known to those skilled in the art. They encompass promoters, enhancers, termination signals, targeting signals and the like. Promoters for use in connection with the nucleic acid molecule may be homologous or heterologous with regard to its origin and/or with regard to the gene to be expressed. Suitable promoters are for instance promoters which lend themselves to constitutive expression. However, promoters which are only activated at a point in time determined by external influences can also be used. Artificial and/or chemically inducible promoters may be used in this context. For genetically modifying bacteria or fungi, the polynucleotides encoding one or several caseins can be introduced into plasmids

Thus, in accordance with the present invention, a recombinant organism or microorganism is produced by genetically modifying fungi or bacteria comprising introducing the above-described polynucleotides, nucleic acid molecules or vectors into a fungus or bacterium. An overview of different expression systems is for instance contained in Baghban et al. Yeast Expression Systems: Overview and Recent Advances. Mol Biotechnol. 2019 May;61(5):365-384; Yang and Zhang. Engineering strategies for enhanced production of protein and bio-products in Pichia pastoris: A review. Biotechnol. Adv. 2018 Jan-Feb;36(1):182-195.; Mojzita et al. Gene expression engineering in fungi. Curr. Opin. Biotechnol. 2019 Oct;59:141-149.; Gomez et al. Alternative Eukaryotic Expression Systems for the Production of Proteins and Protein Complexes. Adv Exp Med Biol. 2016;896:167-84.; Freudl. Signal peptides for recombinant protein secretion in bacterial expression systems. Microb Cell Fact. 2018 Mar 29;17(1):52.; Cui et al. Exploitation of Bacillus subtilis as a robust workhorse for production of heterologous proteins and beyond. World J Microbiol Biotechnol. 2018 Sep 10;34(10):145.; Chen. Bacterial expression systems for recombinant protein production: E. coli and beyond. Biotechnol Adv. 2012 Sep-Oct;30(5):1102-7; Deckers et al, Genetically Modified Micro-Organisms for Industrial Food Enzyme Production: An Overview. Foods 2020, 9, 326. The host cell is cultured in nutrient media meeting the requirements of the particular host cell used, in particular in respect of the pH value, temperature, salt concentration, aeration, antibiotics, vitamins, trace elements etc.

Caseins are known in the art. One can cite, as illustrations, the caseins that are present in Uniprot or Genbank. Examples of such caseins are given in the table below.

| Uniprot | casein type | origin |
|---|---|---|
| P02662 | alpha-S1 | *Bos Taurus* |
| AOA3Q1MJE5 | alpha-S1 | *Bos Taurus* |
| A0A3Q1 NG86 | alpha-S1 | *Bos Taurus* |
| P02663 | alpha-S2 | *Bos Taurus* |
| P02666 | beta | *Bos Taurus* |
| P02668 | kappa | *Bos Taurus* |
| P18626 | alpha-S1 | *Capra hircus* |
| P33049 | alpha S2 | *Capra hircus* |
| P33048 | beta | *Capra hircus* |
| P02670 | kappa | *Capra hircus* |
| P04653 | alpha-S1 | *Ovis aries* |
| P04654 | alpha-S2 | *Ovis aries* |
| P11839 | beta | *Ovis aries* |
| P02669 | kappa | *Ovis aries* |
| O62823 | alpha-S1 | *Bubalus bubalis* |
| B6VPY3 | alpha-S2 | *Bubalus bubalis* |
| B7VGH4 | beta | *Bubalus bubalis* |
| P11840 | kappa | *Bubalus bubalis* |

| | | |
|---|---|---|
| Examples of Caseins from cow (*Bos Taurus*)*,* goat (*Capra hircus*)*,* sheep (*Avis aries*) and buffalo (*Bubalus bubalis*) | | |

Such casein usually includes a signal peptide, which is not present in the mature protein. For example, SEQ ID NO 1-4 correspond to mature caseins from cow, i.e. alpha-S1 (SEQ ID NO 1), alpha-S2 (SEQ ID NO 2), beta (SEQ ID NO 3) and kapa (SEQ ID NO 4). It is possible to use, in the casein composition, fragments of casein proteins (in particular the caseins for which signal peptide is not present), or proteins that are homologous to natural caseins.

In an even more preferred embodiment, each one of the caseins from the casein composition is
- identical to one of the above sequences or
- at least n % identical to one of these sequences, with n being an integer between 10 and 100, preferably 10, 15, 20, 25, 30, 35, 40, 45, 50, 55, 60, 65, 70, 75, 80, 85, 90, 91, 92, 93, 94, 95, 96, 97, 98 or 99, or
- at least n % identical to a stretch of p amino acids taken from one of these sequences, with n being an integer between 10 and 100, preferably 10, 15, 20, 25, 30, 35, 40, 45, 50, 55, 60, 65, 70, 75, 80, 85, 90, 91, 92, 93, 94, 95, 96, 97, 98 or 99, and p being an integer between 30 and 100 amino acids, preferably 30, 40, 50, 60, 70, 80, 90 or 100.

As regards the determination of sequence identity, the following should apply: When the sequences which are compared do not have the same length, the degree of identity either refers to the percentage of amino acid residues in the shorter sequence which are identical to amino acid residues in the longer sequence or to the percentage of amino acid residues in the longer sequence which are identical to amino acid residues in the shorter sequence. Preferably, it refers to the percentage of amino acid residues in the shorter sequence which are identical to amino acid residues in the longer sequence. The degree of sequence identity can be determined according to methods well known in the art using preferably suitable computer algorithms such as CLUSTAL. When using the Clustal analysis method to determine whether a particular sequence is, for instance, at least 60% identical to a reference sequence default settings may be used or the settings are preferably as follows: Matrix: blosum 30; Open gap penalty: 10.0; Extend gap penalty: 0.05; Delay divergent: 40; Gap separation distance: 8 for comparisons of amino acid sequences. For nucleotide sequence comparisons, the Extend gap penalty is preferably set to 5.0. In a preferred embodiment ClustalW2 is used for the comparison of amino acid sequences. In the case of pairwise comparisons/alignments, the following settings are preferably chosen: Protein weight matrix: BLOSUM 62; gap open: 10; gap extension: 0.1. In the case of multiple comparisons/alignments, the following settings are preferably chosen: Protein weight matrix: BLOSUM 62; gap open: 10; gap extension: 0.2; gap distance: 5; no end gap. Preferably, the degree of identity is calculated over the complete length of the sequence.

When using fragments or homologous proteins in the context of the invention, curdling occurs after addition of a curdling agent.

When using fragments or homologous proteins in the context of the invention, it is preferred when these are able to form micelles in presence of calcium.

This method of producing recombinant caseins by fermentation offers a lot of possibilities regarding caseins. Indeed, caseins can be locally modified, or substituted in order to avoid allergenic caseins or replace them by less allergenic caseins. In a preferred embodiment, the casein composition contains recombinant caseins from camel, donkey, or mare.

### Other proteins

Whereas other proteins than caseins are mostly removed in whey, during the curdling process, cheese can nevertheless contain other proteins, including proteins present in small quantities in milk, or whey proteins.

Cheese substitutes according to the invention could also contain other proteins than caseins, including whey proteins, or others. Such proteins could be part of the casein composition, or be added separately in the second step of the method.

### Calcium and other salts

Cow's milk contains about 1,2g of Calcium per liter (about 0,12%, weight content). Calcium is present in cheese, contributing to its nutritive qualities. Calcium represents in the range of 0.1 to 1% of cheese's weight, with the lowest contents of calcium being usually found in fresh cheeses (0.125%, weight content in french "fromage blanc"), while the highest contents are usually found in firm and hard cheese (0.97% in Emmental). In camembert, it is in the range of 0.25% (weight content). In the cheese production process, the amount of calcium remaining in milk depends on the process (Mietton et Chablain, Du lait au fromage: les fondamentaux technologiques. In Gillis JC, Ayerbe A, Le fromage 4eme edition, Lavoisier - Technique Et Documentation 20 avril 2018, with a better retention being achieved with rennet (62-67% of calcium) than with lactic curdling agents (16-17% of calcium). In addition, in order to recapitulate closely the properties of a given cheese category, the percentage of calcium in the LpCC will be important. However, cheese with enhanced calcium content can be envisioned.

In a preferred embodiment, calcium content in the LpCC is comprised between 0.1% and 1.7%.

Some food additive with calcium, notably calcium carbonate (E170) are of animal origin. However, calcium of mineral or vegetal (from the lithothamne sea weed for example) origin also exist. The methods disclosed herein offer the possibility to substitute milk's calcium with calcium of non-animal origin, thereby allowing for diminution of the components of animal origin. In a more preferred embodiment, calcium is from non animal-origin. Other salts can be added, such as, phosphate which is an important component of milk, or others.

### Lipids

Lipids are present in most cheeses, and play a role in the organoleptic sensation. However, cheese with reduced fat content (low fat) or even with no fat have been produced during the last decades, in order to address health concerns. The method disclosed herein offers the possibility to substitute milk lipids with lipids of non-animal origin, thereby allowing for diminution of the components of animal origin. In a more preferred embodiment, said lipids are lipids extracted from plant.

In cheese, fat content may vary from 0% in a totally fat-free product, to more than 50%. Fat content in a cheese corresponds to the mass of lipids in the cheese divided by the total mass of the cheese.

Fat composition may be adjusted, in quantity and quality, in order to mimic the composition of an existing cheese. Lipids are present in high amount in most cheese: 95%-10% of milk's lipids remain in the curd during curdling. However, lipid content varies a lot depending on milk's origin (cow, goat, sheep), and on milk conditioning and cheese production process.

It can be only 7% in fresh cheese, or even lower, and higher than 30% in traditional hard cheese. Recent industrial cheeses include products with very low lipid contents, in order a demand for fat-free products, and very high lipid levels (70% in Boursault, made by Bongrain, France, for example).

In the context of the present invention, fat composition in the LpCC may be modified at will, in order to obtain fat-free or fat-rich products. Fat content in the LpCC (weight content), corresponds to the mass of lipids in the LpCC divided by the total mass of the LpCC.

In a preferred embodiment, fat composition in the LpCC is 0% (weight content). In another preferred embodiment, it is lower than 10% (weight content). In another preferred embodiment, it is comprised between 10% and 20% (weight content). In another preferred embodiment, it is comprised between 20% and 30% (weight content). In another preferred embodiment, it is comprised between 30% and 40% (weight content). In another preferred embodiment, it is comprised between 40% and 50% (weight content). In another preferred embodiment, it is comprised between 50% and 60% (weight content). In another preferred embodiment, it is higher than 60% (weight content).

In milk, lipids consist essentially in triglycerides, i.e., molecules resulting from the fusion of a glycerol molecule ad three fatty acids, by esterification, but this composition will vary a lot during cheese processing, with the hydrolysis of triglycerides producing various amounts of mono and diglycerides, as well as free fatty acids. Free fatty acids can be further processed and have a very important role in the taste and smell of the final product.

Lipids may be included as a composition of lipids extracted from plant. The major fatty acids in cow milk fat are palmitic acid (31%), oleic acid (24%), myristic acid (12%), stearic acid (11%), lower size saturated acids (11%), palmitolic acid (4%) linoleic acid (3%), trans-unsaturated acids (3%) and alpha-linoleic acid (1%). Such composition can be recapitulated in the LpCC. However, it can also be modulated, for example to increase the proportion of unsaturated fatty acids.

Dairy products are rich in saturated fatty acids: in milk, the saturated palmitic, myristic and stearic acids, together with lower size molecules, represent 65% of the fatty acids. One of the advantages of using for example a lipid composition from plants could provide a healthier source of fat. Indeed, plant fat usually contains less saturated fatty acids and trans-fatty acids than animal fat. In addition, the composition could be reinforced in lipids known to have health benefits, such as omega-3 fatty acids, including for example alpha-linolenic acid, eicosapentaenoic acid or docosahexaenoic acid.

In the context of the present invention, various lipid sources form plant can be used, such as canola or rapeseed, sunflower, soybean, coco oil, olive oil, walnut oil, hazel nut oil, and margarin.. Such products are largely commercialized. However, in products of sufficient purity should be used, in order to avoid the carryover of undesired flavors and/or tastes. Deodorized oils can be used. Deodorization is a steam stripping process wherein a good-quality steam, generated from de-aerated and properly treated feedwater, is injected into soybean oil under low absolute pressure and sufficiently high temperature to vaporize the Free Fatty Acid (FFA) and odoriferous compounds and carry these volatiles away from the feedstock. The various processes of soybean oil processing are described in Practical Handbook of Soybean Processing and Utilization (1995), OCS Press. Elsevier Inc.

In a preferred embodiment, lipids consist in in canola oil, rapeseed oil, sunflower oil, soybean oil, coco oil, olive oil, walnut oil, hazel nut oil, or margarin. In a more preferred embodiment, lipids consist in canola oil, rapeseed oil, soybean oil or coco oil.

### Emulsifying and gelling agents

An emulsifier or emulsifying agent is a compound or substance that acts as a stabilizer for emulsions, preventing liquids that ordinarily don't mix from separating. It can be helpful using an emulsifying agent, in order to avoid formation of a solid and liquid phase during and after the preparation of the LpCC. A very widespread is lecithin. The term actually designates a family of amphiphilic compounds, found in animal and plants, but commercial soybean or sunflower lecithin can easily be found. Other ingredients, such as vegetal gums can also be used, such as guar gum, arabic gum, tragacanth gum, xanthan gum, carob gum, cellulose gum.

In a preferred embodiment, an emulsifying agent is added, in order to avoid the formation of a liquid and a solid phase. In a more preferred embodiment, this emulsifying agent is lecithin.

Alternatively, or in addition, gelling agents such as agar-agar could be used.

### Carbohydrates

In another preferred embodiment, the other ingredients contain at least calcium, lipids, and a carbohydrate. Lactose is the major milk carbohydrate. Cow's milk contains 70 mg/L of lactose, 20 mg/L of galactose and traces of other carbohydrates including various oligosaccharides. During and in aged cheese it is eventually totally or almost totally degraded. However, it is still present in significant amounts in fresh cheese, which should usually be avoided by people with strong lactose intolerance. Anyway, for each cheese type, individual reaction will depend on the severity of the lactose intolerance.

Lactose is important because it is a feedstock for cheese microflora (ferments). However, it can be replaced by glucose or other carbohydrates. Carbohydrates such as glucose, saccharose or fructose are derived from plants, whereas most commercial lactose is today of animal origin. The methods disclosed herein offer the possibility to substitute milk's lactose with glucose or with another carbohydrate of non-animal origin, thereby allowing for diminution of the components of animal origin, with the additional advantage of definitively dealing with lactose intolerance.

In a preferred embodiment, no lactose is added in the composition. In a more preferred embodiment, a carbohydrate of non-animal origin is added in the composition. In an even more preferred embodiment, this carbohydrate is glucose.

### Vitamins

In a more preferred embodiment, the other ingredients contain at least calcium, lipids, a carbohydrate, and a vitamin. Dairy products are usually rich in vitamins. Milk is a good source of hydrosoluble vitamins B₁₂, B₂, B₈, B₅, but contribute little to the needs for vitamin B₃. Milk also brings the liposoluble vitamin A but is a poor source of vitamins D, E and K. However, in cheese, which is usually enriched in fat, this low content in liposoluble vitamins is alleviated. Cheese substitute may have the same nutritional value in terms of vitamin as conventional cheese, and may be even supplemented with higher vitamin amounts. However, in the context of a need for substitutes of non-animal origin, which may often be associated with a vegan diet, or with a diet with a lower animal product content, vitamin B₁₂ is the most important additive to provide, since it is usually brought essentially by food derived from animals. In a more preferred embodiment, the composition is supplemented with at least a vitamin. In an even more preferred embodiment, this vitamin is vitamin B₁₂.

In a more preferred embodiment, the other ingredients contain at least calcium, lipids, a carbohydrate, and vitamin. B12.

### Curdling agents

Whereas milk clotting can be achieved by the addition of acid, or simply by lactic fermentation, most cheese today are made using rennet, most of the time ion conjunction with lactic bacteria. Upon digestion of κ-casein by rennet enzymes, casein/calcium phosphate micelles are destabilized, and clotting occurs, resulting in the formation of curd. Thus, rennet will be used in most cases. However, different types of rennet exist, as described above. Traditional rennet are being derived from calves stomach, but other types of rennet have been developed, including plant-based rennet and rennet derived from recombinant microorganisms. Such non animal rennet can be bought for example from Chr. Hansen Lab. (DK), Gist Brocades/DSM. (NL), Pfizer Inc. (USA) (see Le fromage Gillis JC, Ayerbe A (2018), Lavoisier ed., Paris).

In a more preferred embodiment, a curdling agent of non-animal origin is added. In a more preferred embodiment, said curdling agent of non-animal origin is a composition containing a recombinant rennet produced by microbe.

### Ferments

In a more preferred embodiment, a ferment is added. Lactic bacteria are essential components of cheese ferments. They contribute to lactic acid production, which in turn modify the pH, thereby modifying the physico-chemical conditions, and contributing, together with rennet, to the texture of the final product. In an even more preferred embodiment, this ferment comprises at least one lactic bacteria. In an even more preferred embodiment, lactic bacteria is chosen among *Streptococcus cremoris, Streptococcus lactis, Streptococcus diacetylactis, Streptococcus thermophilus, Leuconostoc lactis, Leuconostoc citrovorum, Lactobacillus bulgaricus,* and *Lactobacillus helveticus.*

Lactic bacteria are the first microbes to spread in milk and curd, and by modifying the composition of curd, pave the way for the next wave of ferments. Together with this next wave of ferments, they contribute to maturation or aging, including non-starter lactic acid bacteria (NSLAB) and other microorganisms. In an even more preferred embodiment, the ferments comprise at least one NSLAB. In an even more preferred embodiment, this NSLAB is selected from the group consisting of *Lactobacillus paracasei, Lactobacillus casei, Lactobacillus ramnosus, Lactobacillus plantarum, Lactobacillus brevis, Lactobacillus bucheneri, Lactobacillus fermentum, Enterocuccus faecalis, Enterocuccus faecium, Pediococcus pentosaceus,* and *Carbiobacterium laltaromatium.*

In an even more preferred embodiment, the ferments contain at least another microbe which is not a lactic bacterium, and which can be a yeast, a mold, or a non-lactic bacterium. In an even more preferred embodiment, the ferments contain at least another microbe, which is a yeast selected from the group consisting of *Debaryomyces hansenii, Geotrichum candidum, Kluyveromyces larxianus, Kluyveromyces lactis, Saccharomyces cerevisae, Candida catenulate, Candida intermediata, Torulaspora delbrueckii, Candida zeylanoides, Pichia mebranifaciens, Candida rugiosa,* and *Pichia fermentans.*

In an even more preferred embodiment, the ferments contain at least another microbe, which is mold selected from the group consisting of *Penicillium camemberti, Penicillium roqueforti, Chrysosporum sulfureum, Fusarium domesticum, Isomucor fuscus, Mucor plumbeus, Penicillium commune,* and *Sprendonema casei.*

Ferments can be commercially obtained from a large number of companies, including for example Chr. Hansen.

### Water (moisture)

In cow's milk, water represents about 87.4% (weight content), and 90.8% on a fat free basis. Water content, weight content, is the mass of water divided by the total weight, in a given volume. Water content, also called moisture, on a fat-free basis, is the mass of water present in the product, divided by the total mass minus the mass of fat (=mass water/(total mass-mass of fat). Moisture is an important feature of cheese type, and is major criteria of the cheese types as defined below.

Ideally, moisture in LpCC should as low as possible, in order to avoid waste, while still allowing some draining. In the case of soft or semi-soft cheese and firm or hard cheese (see below), LpCC could have moisture contents significantly below the moisture content of milk.

In a preferred embodiment, moisture content in the LpCC is inferior to 90%, on a fat free basis. In a more preferred embodiment, it is below 80%.

### Process

The making of a cheese is a process based on centuries of experience. Beyond the traditional processes, industrial processes, largely inspired from local traditions, have been developed. These processes, traditional, or recent, artisanal or industrial are described in details in Le fromage Gillis JC, Ayerbe A (2018), Lavoisier ed., Paris). Depending on the process of production, which depends on the type of the curd that is obtained and of its processing, cheeses can be classified in different categories.

The present invention also relates to a method for the production of an edible composition comprising:
- Providing a casein composition
- Mixing said casein composition with at least one other ingredient comprising at least one component selected from the group consisting of water, calcium, lipids, and carbohydrate, so as to obtain a liquid composition
- Adding at least one curdling agent to the liquid composition so as to obtain a curd
- Further processing the curd to obtain an edible composition (cheese substitute), selected in the group consisting of
   (i) A fresh cheese substitute or
   (ii) A soft or semi soft cheese substitute or
   (iii) A firm or hard cheese substitute

In a preferred embodiment, the cheese substitute has the essential features of fresh cheese. The fresh cheese contains a moisture of 80% or higher, on a fat-free basis. The percentage of moisture on a fat-free basis is the mass of water present in the product, divided by the total mass minus the mass of fat (=mass water/total mass - mass of fat). In fresh cheese, protein content is usually lower than 15%, and can be as low as 7% of total weight or even lower.

In another preferred embodiment, the cheese substitute has the essential features of soft cheese or semi-soft cheese. Soft cheese contains between 67 and 80% moisture, on a fat-free basis, and can be bloomy rind or washed rind. Their protein content is often in the range of 20% of total weight. The soft cheese, bloomy rind has a rich and creamy texture with a slight elasticity in the cheese. The aging process depends on its thickness. This cheese has a mixed coagulation with slow draining, inoculated with specific molds. The soft, washed rind cheese has a rich and creamy texture with a slight elasticity in the cheese. During the aging process, the cheese is turned over regularly and brushed or washed in brine with beer, mead, wine or spirits. The semi-soft cheeses contain between 62% and 67% moisture, on a fat-free basis. The texture can be soft and creamy. When aging, the cheese can be washed (washed rind) in brine with red smear (with or without alcohol). The cheese can also be brushed and/or develop a natural rind.

In another preferred embodiment, the cheese substitute has the essential features of firm cheese or hard cheese. Generally, a firm or hard Cheese is pressed to remove as much whey as possible after the curdling process. Firm cheese contains 50% and 62% moisture, on a fat-free basis. Their protein content can be in the range of 30% of total weight. The texture for this cheese is firm and elastic. Among the firm cheeses, you will find some cheeses that are not aged and are milder. Aging for this type of cheese can last from months or years. Hard cheeses have a moisture of less than 50%, on a fat-free basis, and can be aged and stored for several years. They also usually have high protein content (>30%).

Whereas blue cheese are often considered as a separate category, blue cheeses in the context of the invention will be only considered as fresh, soft or semi soft, or firm or hard cheese, depending on the criteria defined above.

Whereas traditional cheeses were often associated with given ranges of fat content, the recent production of low-fat cheese varieties has somewhat erased fat content from typical features, at least for fresh cheese and soft cheese, and the elements that would be used for classification of a cheese into one of the above categories is moisture and protein, rather than fat content.

In the context of the present invention, the method for the production of a curd or of a cheese substitute comprises obtaining a liquid composition named LpCC (Liquid pre-Curd Composition), by step of mixing a casein composition with at least one other ingredient comprising at least one component selected from the group consisting of water, calcium, lipids, and carbohydrate.

It is to be understood that the composition of LpCC is not meant to recapitulate milk's composition. Indeed, during curdling, most of milk's water content is removed, together with non-casein proteins and other molecules. LpCC is thus preferably a concentrated solution that allows saving water, and simplifying the draining process.

In the 60's, a new process was developed for the production of cheese, consisting in the concentration of milk's nutrients by ultrafiltration, and in the formation of a pre-cheese or cheese milk, depleted in water, and having a composition close to the final product (US4205090; Maubois and Mocquot (1975) Application of membrane ultrafiltration to preparation of various types of cheese. J. Dairy Science, Volume 58, page 1001). In this process, whey proteins are largely retained in the curd, increasing the protein mass yield, and the amount of rennet required is largely reduced. However, the kinetics of the clotting process were modified (Garnot et al (1982) Influence of Protein and Fat Contents of Ultrafiltered Milk on Rheological Properties of Gels Formed by Chymosin. J. Dairy Science, Volume 65 (12), pages 2267-2273).

In the context of the present invention, using a concentrated LpCC avoids the waste of water during extensive draining. The process of curd forming and curd processing may have to be adapted to the formulation.

In cow's milk, organic molecules and salts represent in the range of 10% of milk's total mass. This figure varies greatly among mammals. For example, whales produce a very rich milk, with 36% of fat, 13% proteins, 1% carbohydrates, and only 49% of water. In the context of the invention, in LpCC, the respective concentrations of proteins, lipids, salts and carbohydrate will be adjusted to fit the final desired compositions in the cheese substitutes. However, the composition can be concentrated as compared with cow's milk.

Casein have an important role in the curdling process. They represent the major part of proteins in milk (about 85% of total proteins in cow's milk), and are even more over-represented in cheese, since most of the other proteins are removed in the whey. In a preferred embodiment, during the step of mixing a casein composition together with other ingredients, comprising at least one ingredient among water, calcium, lipids, resulting in a liquid composition, casein content in said liquid composition or LpCC is maintained between 5% and 35% (weight content). Casein content in the LpCC (weight content), corresponds to the mass of casein in the LpCC divided by the total mass of the LpCC..

Protein content in the LpCC will highly impact the protein content in the final product, and can be adjusted in order to produce a desired variety of cheese.

Furthermore, in the methods herein describes, water, calcium and/or fat (generally all of these ingredients) are added to the casein composition so as to obtain a LpCC, the composition of which can be determined by one of skill in the art depending on the type of cheese substitute that one wishes to produce and of the desired organoleptic and nutritional qualities.

### Process for making a fresh cheese

In a preferred embodiment, the present invention relates to a method for the production of a curd or of an edible composition comprising:
- Providing a casein composition

Mixing said casein composition with at least one other ingredient comprising at least one component selected from the group consisting of water, calcium, lipids, and carbohydrate, so as to obtain a liquid composition (LpCC), wherein protein content is below 12% (weight content).
- Adding at least one curdling agent to the liquid composition so as to obtain a curd and optionally
- Further processing the curd to obtain an edible composition (cheese substitute),
Wherein said cheese substitutes is a substitute for a fresh cheese.

In a more preferred embodiment, the present invention relates to a method for the production of a curd or of an edible composition comprising:
- Providing a casein composition

Mixing said casein composition with at least one other ingredient comprising at least one component selected from the group consisting of water, calcium, lipids, and carbohydrate, so as to obtain a liquid composition (LpCC), wherein protein content is comprised between 2% and 10% (weight content).
- Adding at least one curdling agent to the liquid composition so as to obtain a curd and optionally
- Further processing the curd to obtain an edible composition (cheese substitute),
Wherein said cheese substitutes is a substitute for a fresh cheese.

In a more preferred embodiment, said substitute for a fresh cheese has a moisture content of 80%, on a fat-free basis, or higher. In an even more preferred embodiment, said substitute for a fresh cheese has a protein content comprised between 3% and 15% (weight content).

In a more preferred embodiment, the present invention relates to a method for the production of a curd or of an edible composition comprising:
- Providing a casein composition

Mixing said casein composition with at least one other ingredient comprising at least one component selected from the group consisting of water, calcium, lipids, and carbohydrate, so as to obtain a liquid composition (LpCC), wherein protein content is comprised between 5% and 10% (weight content).
- Adding at least one curdling agent to the liquid composition so as to obtain a curd and optionally
- Further processing the curd to obtain an edible composition (cheese substitute),
Wherein said cheese substitutes is a substitute for a fresh cheese.

In a preferred embodiment, moisture in the LpCC is superior to 85%. In a preferred embodiment, moisture in the LpCC is superior to 90%.

In a preferred embodiment, the LpCC has a calcium content comprised between 0.1% and 1%. In a more preferred embodiment, the LpCC has a calcium content comprised between 0.5% and 1%, and the curdling agents do not comprise any rennet, natural or synthetic.

In a more preferred embodiment, said substitute for a fresh cheese has a moisture content of 80%, on a fat-free basis, or higher. In an even more preferred embodiment, said substitute for a fresh cheese has a protein content comprised between 3% and 15% (weight content). In an even more preferred embodiment, said substitute for a fresh cheese has a protein content comprised between 5% and 15% (weight content).

Protein content (weight content) in a cheese substitute corresponds to the mass of protein in this substitute divided by the total mass of the cheese substitute.

### Process for making a soft or semi-soft cheese

In a preferred embodiment, the present invention relates to a method for the production of a curd or of an edible composition comprising:
- Providing a casein composition

Mixing said casein composition with at least one other ingredient comprising at least one component selected from the group consisting of water, calcium, lipids, and carbohydrate, so as to obtain a liquid composition (LpCC), wherein protein content is comprised between 10% and 25 % (weight content).
- Adding at least one curdling agent to the liquid composition so as to obtain a curd and optionally
- Further processing the curd to obtain an edible composition (cheese substitute),
Wherein said cheese substitutes is a substitute for a soft or semi-soft cheese.

In a more preferred embodiment, the present invention relates to a method for the production of a curd or of an edible composition comprising:
- Providing a casein composition

Mixing said casein composition with at least one other ingredient comprising at least one component selected from the group consisting of water, calcium, lipids, and carbohydrate, so as to obtain a liquid composition (LpCC), wherein protein content is comprised between 10% and 18 % (weight content).
- Adding at least one curdling agent to the liquid composition so as to obtain a curd and optionally
- Further processing the curd to obtain an edible composition (cheese substitute),
Wherein said cheese substitutes is a substitute for a soft or semi-soft cheese.

In a preferred embodiment, moisture in the LpCC is inferior to 85%. In a more preferred embodiment, moisture in the LpCC is inferior to 80%.

In a preferred embodiment, the LpCC has a calcium content comprised between 0.3% and 1.7%. In a preferred embodiment, the LpCC has a calcium content comprised between 0.3% and 0.5%, and the curdling agents comprise rennet, natural or synthetic.

In a more preferred embodiment, said substitute for a soft or semi-soft cheese has a moisture content comprised between 62 and 80%, on a fat-free basis.

In an even more preferred embodiment, said substitute for a soft or semi-soft cheese has a protein content comprised between 15% and 30% (weight content).

Protein content (weight content) in a cheese substitute corresponds to the mass of protein in this substitute divided by the total mass of the cheese substitute.

### Process for making a firm or hard cheese

Firm and hard cheese have the highest protein content and lowest moisture content. Low moisture results both from a step wherein cheese is pressed to remove whey, and from a long aging. In order to avoid to waste water, the making of a substitute for a for hard cheese should start with a liquid composition (LpCC) rich in proteins, in the range of 15%, allowing yet for up to 50% of weight loss during the process, including aging. Given the range of protein contents in firm and hard cheese (in the range of 38-40% in old Parmiginano), this concentration should be lower than 35% (weight content) in the LpCC, in order to let room for aging. However, "protein-rich" substitutes for hard cheese, with up to 50% of protein or more (weight content) are also an application of the method disclosed here.

In a preferred embodiment, the present invention relates to a method for the production of a curd or of an edible composition comprising:
- Providing a casein composition

Mixing said casein composition with at least one other ingredient comprising at least one component selected from the group consisting of water, calcium, lipids, and carbohydrate, so as to obtain a liquid composition, wherein protein content is comprised between 15 and 35 % (weight content).
- Adding at least one curdling agent to the liquid composition so as to obtain a curd and optionally
- Further processing the curd to obtain an edible composition (cheese substitute), said processing comprising a step wherein the curd is pressed to remove whey
Wherein said cheese substitutes is a substitute for a firm or hard cheese.

In a preferred embodiment, moisture in the LpCC is inferior to 80%.

In a preferred embodiment, the LpCC has a calcium content comprised between 1% and 1.7%.
In a more preferred embodiment, said substitute for a firm or hard cheese has a moisture content lower than 62%, on a fat-free basis.
In an even more preferred embodiment, said substitute for a firm or hard cheese has a protein content comprised between 25% and 50% (weight content).
Protein content (weight content) in a cheese substitute corresponds to the mass of protein in this substitute divided by the total mass of the cheese substitute.

### Other aspects of process

The order of ingredient mixing can vary. For example, when a casein dry powder is used as casein composition, according to the invention, it can be preferable to incubate it first with water and calcium, at low temperature, for more than 1 hour. Thus, during the step of mixing a casein composition together with other ingredients, comprising at least one ingredient among water, calcium, lipids, resulting in a liquid composition, the various ingredients can be added in a sequential manner.

In a preferred embodiment, during the step of mixing a casein composition together with other ingredients, comprising at least one ingredient among water, calcium, lipids, resulting in a liquid composition, the casein composition is first mixed with calcium and water, and incubated at low temperature for at least one hour. Low temperature can be 4°C. Incubation time can be two hours or more. Other components, such as lipids, carbohydrates, vitamins and others will be added after this incubation.

In a more preferred embodiment, the process comprises the steps of
- Mixing the casein composition, calcium and water,
- adding carbohydrates and lipids or one or several compositions containing carbohydrates and lipids to this mixture to obtain the LpCC
- Adding curdling agent and ferments to the LpCC
- Molding, draining and optionally, aging.

The invention also relates to a process to obtain a composition able to curd, comprising providing a casein composition, and mixing such with at least calcium and water so as to obtain a composition able to curd upon addition of a curdling agent. LpCC described herein can be obtain according to such process.

### Product

The present invention also relates to an edible composition, produced by:
- Providing a casein composition
- Mixing said casein composition with at least one other ingredient comprising at least one component selected from the group consisting of water, calcium, lipids, and carbohydrate, so as to obtain a liquid composition
- Adding at least one curdling agent to the liquid composition so as to obtain a curd
- Further processing the curd to obtain a cheese substitute, wherein said cheese substitute is chosen among
   (iv) A fresh cheese substitute or
   (v) A soft or semi soft cheese substitute or
   (vi) A firm or hard cheese substitute

In a more preferred embodiment, said edible composition is a substitute for a fresh cheese and has a moisture content of 80%, on a fat-free basis, or higher. In an even more preferred embodiment, said substitute for a soft or semi-soft cheese has a protein content comprised between 5% and 15% (weight content).

In a more preferred embodiment, said edible composition is a substitute for a soft or semi-soft cheese and has a moisture content comprised between 62 and 80%, on a fat-free basis. In an even more preferred embodiment, said substitute for a soft or semi-soft cheese has a protein content comprised between 15% and 30% (weight content).

In a preferred embodiment, such edible composition is lactose free

In a preferred embodiment, said cheese substitute is does not contain caseins of animal origin.

In a more preferred embodiment, said cheese substitute is does not contain any ingredient of animal origin

In a more preferred embodiment, said cheese substitute is totally animal-free.

### DESCRIPTION OF DRAWINGS

**Figure 1** represents a soft cheese made according to the invention, as described in example 1. The product on the picture has been aged for 2 weeks.
**Figure 2** represents a fresh cheese made according to the invention, as described in example 2.

### EXAMPLES

### Example 1: Making of a soft cheese

### Obtaining a casein composition: mixing casein, calcium and water:

- 90 g of casein composition (Slow-Release Casein, MyProtein) were mixed with 10 g of calcium carbonate (Calcidose Mayoly Spinder) and 500 ml water. MyProtein Slow-Release casein is a dry composition comprising, for 100g total: 76g of proteins (caseins), 1.5 g of lipids, 4 g of glucids, and 0.25 g of salts. The mixture was incubated for more than 2 hours at a temperature between 4°C and 8°C, for homogeneization.

### Preparation of the liquid pre-curd composition

The casein composition obtained above was heated at 35°C. Then, 3 g of glucose (Dextrose Sugar, ToquedeChef, France) and 40 g of deodorised coconut oil (BioPlanete, France), or sunflower oil (Monoprix, France) were added and the solution was mixed. Protein content in the LpCC was estimated to be about 10% (weight content).

### Curdling

0.5 g of Beaugel 9 (Etablissement Coquard, France) mixture containing rennet, lactic ferments and ripening ferments were added and the composition is incubated at 20°C for two to twelve hours, in a mold, and then at low temperature (between 4°C and 8°C) for 16 hours. Composition's weight was measured in order to precisely monitor draining in the further steps.

### Draining, salting and aging

After 16 hours at low temperature, the product was removed from the mold, and placed into a draining mold for draining. The cheese mold was placed into a box to control hygrometry. About 1/4 to ½ teaspoon of table salt (La Baleine, France), depending on desired taste, can be spread on the upper face and the product is incubated at 14°C. Twenty-four hours later, the product is flipped, and the same salt composition is spread on the other face. The product is then removed from the draining mold, set on a grid and incubated at 14°C into the refining box to control hygrometry, and flipped every second day, for several weeks. During this period, water is removed from the cheese mold on a regular manner.

Product's weight is monitored every day, in order to evaluate the level of draining. It is considered that weight loss consists essentially in water. Since the initial composition is known, an evaluation of water loss allows for the calculation of the product composition, in terms of moisture and protein composition at a given time. Aging is stopped after the product has reached the characteristics of a soft cheese (notably <80% moisture, fat-free basis), but before it has the low moisture of a firm cheese (<62%, fat-free basis).

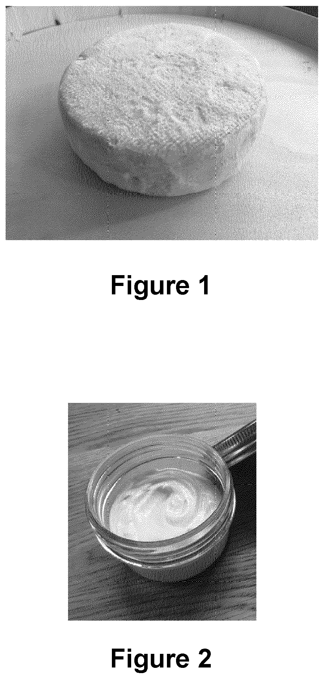

A 2-week old product is featured on Figure 1.

### Testing

The product, was evaluated for aspect, color, smell and taste by a panel of 12 person, and found to have the aspect, smell and taste of a soft cheese.

Protein content in the LpCC was estimated to be about 10% (weight content). Tries with lower amounts of proteins proved to be difficult for a soft cheese, resulting in less solid textures. It could be estimated however, that protein composition could be increased easily. However, by 25% of protein in LpCC, one can reasonably infer that any substantial draining (>10% of loss of total weight) would result in a protein content closer to a firm cheese. In order to allow more than 30% of loss of total weight, we infer that in LpCC, a protein content inferior to 18% (weight content) is preferable.

### Example 2: Making of a fresh cheese

### Obtaining a casein composition: mixing casein, calcium and water:

- 8 g of micellar casein (Slow-Release Casein, MyProtein,) were mixed with 1 g of calcium carbonate (Calcidose Mayoly Spinder) and 190ml or 250 ml water. The mixture was incubated for more than 2 hours at a temperature between 4°C and 8°C, for homogeneization. The composition is then mixed with 12 g of a deodorised coconut oil (BioPlanete, France), or sunflower oil (Monoprix, France).

### Preparation of the liquid pre-curd composition

The casein composition was heated at 35°C. Then, 12.5 g of glucose (Dextrose Sugar, ToquedeChef, France) were added. pH was closed to 6.5.

### Curdling

0.5 g lactic ferments (Streptococcus thermophilus, Lactobacillus bulgaricus, mon yaourt maison, Alsa) were added and the composition was incubated at 40°C to 45°C for 8 to 10 hours. pH is then closed to 4.

After this step, a cheesecloth is used to remove some liquid to obtain a more compact composition.

### Mixing with salt and texturing agents

Texturing agents (Xanthan gum, Carob bean gum, Guar gum, Arabic gum, ...) can be added if necessary.

After 12 hours at low temperature (between 4°C and 8°C), the product can be consumed.

Product's weight is monitored, in order to evaluate the level of draining. It is considered that weight loss consists essentially in water. Since the initial composition is known, an evaluation of water loss allows for the calculation of the product composition, in terms of moisture and protein composition at a given time, in order to check that it has the properties of a fresh cheese (notably >80% of moisture, fat-free basis).

A fresh product is featured on Figure 2.

### Testing

The product, was evaluated for aspect, color, smell and taste by a panel of 10 persons, and found to have the aspect, smell and taste of a fresh cheese.

Protein content in the LpCC was estimated to be about 2% (weight content) when 250 ml water were added in the LpCC and about 3% (2.7%) when 210 ml water were added in the LpCC. Protein content could be increased easily. However, by 12% of protein in LpCC, one can reasonably infer that any substantial draining (>20% of loss of total weight) would result in protein composition and a moisture content close to a soft cheese. In order to allow more than 20% of loss of total weight, we infer that in LpCC, a protein content inferior to 10% (weight content) is preferable.

Tries with protein contents lower than 2% proved to be possible but to result in semi-solid textures, unless extensive draining was used. We infer that a protein content superior to 2% (weight content) is preferable. In addition, in order to make fresh cheeses with high protein contents, with low draining and low water wasting, a protein content in the LpCC superior to 5% (weight content) would be even preferable.

## Claims

1. A method for the production of a curd comprising:
- Providing a casein composition
- Mixing said casein composition with at least one other ingredient comprising at least one component selected from the group consisting of water, calcium, lipids, and carbohydrate, so as to obtain a liquid pre-curd composition (LpCC)
- Adding at least one curdling agent to the liquid composition so as to obtain a curd
- Further processing the curd to obtain a cheese substitute

2. A method for producing an edible composition, comprising
- Performing the method of claim 1 and
- Further processing the curd to obtain an edible composition.

3. The method of claim 2, wherein the edible composition is a cheese substitute, selected from the group consisting of
(i) A fresh cheese substitute,
(ii) A soft or semi-soft cheese substitute and
(iii) A firm or hard cheese substitute.

4. The method of claim 3, wherein protein content in the LpCC is inferior to 12 % (weight content) and said edible composition is a substitute for a fresh cheese

5. The method of claim 4, wherein said substitute for a fresh cheese has a moisture content of 80%, on a fat-free basis, or higher.

6. The method of claim 5, wherein said substitute for a fresh cheese has a protein content comprised between 2% and 15% (weight content).

7. The method of claim 3, wherein protein content in the LpCC is comprised between 10% and 18 % (weight content) and said edible composition is a substitute for a soft or semi-soft cheese

8. The method of claim 7, wherein said substitute for a soft or semi-soft cheese has a moisture content comprised between 62% and 80%, on a fat-free basis

9. The method of claim 8, wherein said substitute for a soft or semi-soft cheese has a protein content comprised between 15% and 30% (weight content).

10. The method of claim 3 protein content in the LpCC is comprised between 15% and 35 % (weight content) and said edible composition is a substitute for a firm or hard cheese

11. The method of claim 10, wherein said substitute for a firm or hard cheese has a moisture content lower than 62%, on a fat-free basis

12. The method of claim 11, wherein said substitute for a firm or hard cheese has a protein content comprised between 25% and 50% (weight content).

13. The method of any one of claims 1 to 12, wherein no lactose is added during the method.

14. The method of any one of claims 1 to 13, wherein the casein composition comprises a casein of non-animal origin.

15. The method of any one of claims 1 to 14, wherein the casein composition comprises at least 50% of caseins of non-animal origin.
